# EUROPEAN PATENT APPLICATION

(11) **EP 3 709 603 A1**
(43) Date of publication of application: **16.09.2020**
(21) Application number: 18894082.9
(22) Date of filing: 14.12.2018
(51) Int. Cl.: H04L 29/08, H04L 29/06, H04L 12/28, H04L 29/12

(54) **METHOD FOR INTERNET OF THINGS DEVICE TO ACCESS NETWORK, APPARATUS, AND SYSTEM**

(30) Priority: 28.12.2017 CN 201711453817
(71) Applicant: Huawei Technologies Co., Ltd., Shenzhen, Guangdong 518129 (CN)
(72) Inventor: CHENG, Zhigao, Shenzhen, Guangdong 518129 (CN); LIU, Rong, Shenzhen, Guangdong 518129 (CN)
(74) Representative: Pfenning, Meinig & Partner mbB
(86) International application number: PCT/CN2018/121089
(87) International publication number: WO 2019/128734

(57) **Abstract**

This application provides a method for accessing a network by an internet of things device, an apparatus, and a system. The system includes a registration server and a plurality of cloud gateway servers. The cloud gateway server provides a network access service for the internet of things device, and the registration server records a correspondence between an identifier of the internet of things device and an address of the cloud gateway server. The internet of things device obtains, by using a connection to the registration server, an address of a cloud gateway server corresponding to the internet of things device, and establishes a connection to the cloud gateway server. Because the internet of things device obtains, by using a unified registration server, the address of the cloud gateway server required for accessing the network, the address of the cloud gateway server does not need to be configured on the internet of things device. This avoids an access failure that may be caused by incorrect manual configuration of the address of the cloud gateway server, and reduces production complexity of the internet of things device.

## Description

This application claims priority to Chinese Patent Application No. 201711453817.4, filed with the Chinese Patent Office on December 28, 2017 and entitled "METHOD FOR ACCESSING NETWORK BY INTERNET OF THINGS DEVICE, APPARATUS, AND SYSTEM", which is incorporated herein by reference in its entirety.

### TECHNICAL FIELD

This application relates to the field of IT technologies, and in particular, to a method for accessing a network by an internet of things device, an apparatus, and a system.

### BACKGROUND

Internet of things (Internet of things, IoT) is an important part of new-generation information technologies and also an important development phase in an information era. The internet of things is the internet on which things are connected, which has two meanings: First, a core and a basis of the internet of things are still the internet, and the internet of things is a network extended and expanded on a basis of the internet. Second, the internet of things is extended and expanded between any things to perform information exchange and communication. The internet of things is widely used in network convergence by using communications sensing technologies such as intelligent sensing and identification technologies. Therefore, the internet of things is also referred to as the third wave of world information industry development following computers and the internet.

An internet of things device has a communication address on the network and is connected to the internet of things by using the cloud gateway server. An address (IP or a domain name) of the cloud gateway server connected to the internet of things device may need to be changed because the internet of things device is installed, moved, or tested, or the cloud gateway server is adjusted. Therefore, the address of the cloud gateway server corresponding to the internet of things device needs to be manually reconfigured. In addition, the address of the cloud gateway server may be incorrectly configured due to misoperations. As a result, the internet of things device fails to access the network.

### SUMMARY

Embodiments of this application provide a method for accessing a network by an internet of things device, an apparatus, and a system, to resolve a problem that the internet of things device fails to access the network because an address of a cloud gateway server corresponding to the internet of things device is incorrectly configured due to manual configuration of the address of the cloud gateway server.

Specific technical solutions provided in the embodiments of this application are as follows.

According to a first aspect, an internet of things system is provided. The internet of things system includes a registration server and a plurality of cloud gateway servers, and there is a communication connection between the registration server and an internet of things device.

The registration server configures a correspondence between an identifier of the internet of things device and an address of the cloud gateway server, and receives, through the communication connection, a first server address query request sent by the internet of things device, where the first server address query request carries the identifier of the internet of things device. The registration server queries, based on the correspondence, an address of a first cloud gateway server corresponding to the identifier of the internet of things device, and returns a first server address query response to the internet of things device, where the first server address query response carries the address of the first cloud gateway server, and the address of the first cloud gateway server is used to instruct the internet of things device to establish a communication connection to the first cloud gateway server.

The first cloud gateway server is adapted to establish the communication connection to the internet of things device.

In this embodiment of the present invention, the correspondence between the identifier of the internet of things device and the address of the cloud gateway server is recorded on the registration server. The internet of things device obtains, by using the connection to the registration server, an address of a cloud gateway server corresponding to the internet of things device, and establishes a connection to the cloud gateway server. Because the internet of things device obtains, by using a unified registration server, the address of the cloud gateway server required for accessing the network, the address of the cloud gateway server does not need to be configured on the internet of things device. This avoids an access failure that may be caused by incorrect manual configuration of the address of the cloud gateway server, and reduces production complexity of the internet of things device.

Further, the registration server is further adapted to update the correspondence, where an updated cloud gateway server corresponding to the internet of things device is a second cloud gateway server in the plurality of cloud gateway servers.

The first cloud gateway server is further adapted to send a notification message to the internet of things device, where the notification message is used to indicate that a cloud gateway server corresponding to the internet of things device changes.

The registration server is further adapted to receive a second server address query request sent by the internet of things device, where the second server address query request carries the identifier of the internet of things device.

The registration server is further adapted to query the updated correspondence based on the identifier of the internet of things device, and determine that the updated cloud gateway server corresponding to the internet of things device is the second cloud gateway server.

The registration server is further adapted to return a second server address query response to the internet of things device, where the second server address query response carries an address of the second cloud gateway server, and the address of the second cloud gateway server is used to instruct the internet of things device to establish a communication connection to the second cloud gateway server.

The second cloud gateway server is adapted to establish the communication connection to the internet of things device.

The internet of things system further includes at least one storage client, and an address of the registration server is configured on the storage client. Because the address of the registration server is configured on the internet of things device, the internet of things device may establish the communication connection to the registration server, and obtain, from the registration server, the address of the cloud gateway server required for accessing the network. In this way, the address of the cloud gateway server does not need to be configured on the internet of things device. This reduces production complexity of the internet of things device.

When the cloud gateway server connected to the internet of things device changes, an address of a new cloud gateway server does not need to be manually configured. This avoids a problem of incorrect configuration that may be caused by manual processing. In this embodiment of the present invention, because an address of an updated second cloud gateway server is recorded on the registration server, when the first cloud gateway server is disabled and the internet of things device cannot access the network, because the registration server records the address of the second cloud gateway server, the internet of things device may obtain the address of the second cloud gateway server from the registration server, and access the network by using the second cloud gateway server.

According to a second aspect, a method for accessing a network by an internet of things device is provided. In the method according to the second aspect, the internet of things device and a registration server perform functions in the foregoing internet of things system.

According to a third aspect, a registration server is provided, where the registration server includes:
a configuration unit, adapted to configure a correspondence between an identifier of an internet of things device and an address of a cloud gateway server;
a connection establishment unit, adapted to establish a communication connection to the internet of things device, where an address of the registration server is configured on the internet of things device;
a receiving unit, adapted to receive, through the communication connection, a first server address query request sent by the internet of things device, where the first server address query request carries the identifier of the internet of things device;
a query unit, adapted to query, based on the correspondence configured by the configuration unit, an address of a first cloud gateway server corresponding to the identifier of the internet of things device; and
a sending unit, adapted to return a first server address query response to the internet of things device, where the first server address query response carries the address of the first cloud gateway server obtained by the query unit through query, and the address of the first cloud gateway server is used to instruct the internet of things device to establish a communication connection to the first cloud gateway server.

The configuration unit is further adapted to update the correspondence, where an updated cloud gateway server corresponding to the internet of things device is a second cloud gateway server in the plurality of cloud gateway servers.

The receiving unit is further adapted to receive a second server address query request sent by the internet of things device, where the second server address query request carries the identifier of the internet of things device.

The query unit is further adapted to query the updated correspondence based on the identifier of the internet of things device, and determine that the updated cloud gateway server corresponding to the internet of things device is the second cloud gateway server.

The sending unit is further adapted to return a second server address query response to the internet of things device, where the second server address query response carries an address of the second cloud gateway server obtained by the query unit through query, and the address of the second cloud gateway server is used to instruct the internet of things device to establish a communication connection to the second cloud gateway server.

According to a fourth aspect, an embodiment of the present invention further provides a registration server, where the registration server is a physical server and has a function of implementing the registration server in the foregoing aspects. The function may be implemented by hardware, or may be implemented by hardware executing corresponding software. The hardware or the software includes one or more modules corresponding to the foregoing functions.

In a possible design, the registration server includes a transceiver and a processor, where the processor is adapted to invoke a set of program code, to execute the method according to the second aspect.

According to a fifth aspect, a computer storage medium is provided, and is adapted to store a computer software instruction used by the registration server in the foregoing aspects. The computer software instruction includes a program designed for executing the foregoing aspects.

### BRIEF DESCRIPTION OF DRAWINGS

FIG. 1 is a schematic structural diagram of an internet of things system according to an embodiment of the present invention;
FIG. 2 is a schematic flowchart of a method for accessing a network by an internet of things device according to an embodiment of the present invention;
FIG. 3 is a schematic flowchart of another method for accessing a network by an internet of things device according to an embodiment of the present invention;
FIG. 4 is a schematic diagram of a logical structure of a registration server according to an embodiment of the present invention; and
FIG. 5 is a schematic diagram of a hardware structure of a registration server according to an embodiment of the present invention.

### DESCRIPTION OF EMBODIMENTS

The following further describes this application with reference to accompanying drawings.

There may be a large quantity of widely distributed cloud gateway servers in internet of things. In a manufacturing process of an internet of things device, an address of a cloud gateway server connected when the internet of things device is initialized cannot be determined. When the address of the cloud gateway server of the internet of things device is manually configured, the internet of things device may fail to access a network due to incorrect manual configuration. In addition, when an entire internet of things device connected to a cloud gateway server is switched to another cloud gateway server, the original cloud gateway server cannot stop running before the switching of the internet of things device is completed.

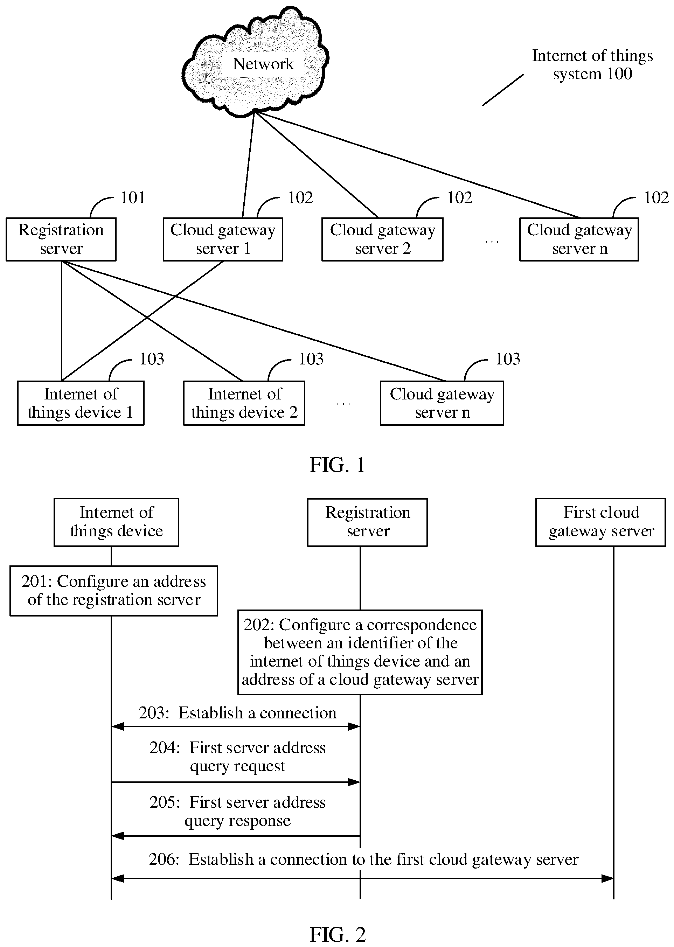

FIG. 1 is a schematic structural diagram of an internet of things system according to an embodiment of the present invention. The internet of things system 100 includes a registration server 101 and a plurality of cloud gateway servers 102. An internet of things device 103 accesses internet of things by using the cloud gateway servers 102.

When the internet of things device 103 is manufactured or before the internet of things device 103 is used for the first time, an address of the registration server 101 is configured on the internet of things device 103. The address of the registration server 101 may be an IP address or a domain name.

The registration server 101 stores a correspondence between an identifier of the internet of things device 103 and an address of the cloud gateway server 102. The correspondence may be configured by an internet of things provider, or may be configured by a user by logging in to a portal screen externally presented by the registration server. The identifier of the internet of things device 103 recorded on the correspondence may uniquely identify an internet of things device.

As shown in FIG. 2, an embodiment of the present invention provides a method for accessing a network by an internet of things device, and the method includes the following steps.

Step 201: Configure an address of a registration server in the internet of things device.

Step 202: Configure, on the registration server, a correspondence between an identifier of the internet of things device and an address of a cloud gateway server.

Step 203: After being started, the internet of things device establishes a communication connection to the registration server based on the configured address of the registration server.

Step 204: The internet of things device sends a first server address query request to the registration server, where the first server address query request carries the identifier of the internet of things device.

Step 205: After receiving the first server address query request, the registration server queries the recorded correspondence, determines, based on the identifier of the internet of things device, an address of a first cloud gateway server corresponding to the internet of things device, and returns a first server address query response to the internet of things device, where the first server address query response carries the determined address of the first cloud gateway server corresponding to the internet of things device.

Step 206: The internet of things device receives the first server address query response, obtains the address of the first cloud gateway server, and establishes a connection to the first cloud gateway server, to access internet of things.

It should be noted that the steps 201 and 202 are not subject to a specific sequence, and the step 202 may be performed before the step 201.

In this embodiment of the present invention, the correspondence between the identifier of the internet of things device and the address of the cloud gateway server is recorded on the registration server. The internet of things device obtains, by using the connection to the registration server, an address of a cloud gateway server corresponding to the internet of things device, and establishes a connection to the cloud gateway server. Because the internet of things device obtains, by using a unified registration server, the address of the cloud gateway server required for accessing the network, the address of the cloud gateway server does not need to be configured on the internet of things device. This avoids an access failure that may be caused by incorrect manual configuration of the address of the cloud gateway server, and reduces production complexity of the internet of things device.

The embodiment shown in FIG. 2 provides the method for accessing a network by an internet of things device for the first time. Further, because the internet of things device may need to change the address of the cloud gateway server connected to the internet of things device when the cloud gateway server is installed, moved, tested, or adjusted, this embodiment of the present invention provides a method for accessing a network by an internet of things device after the address of the cloud gateway server of the internet of things device changes.

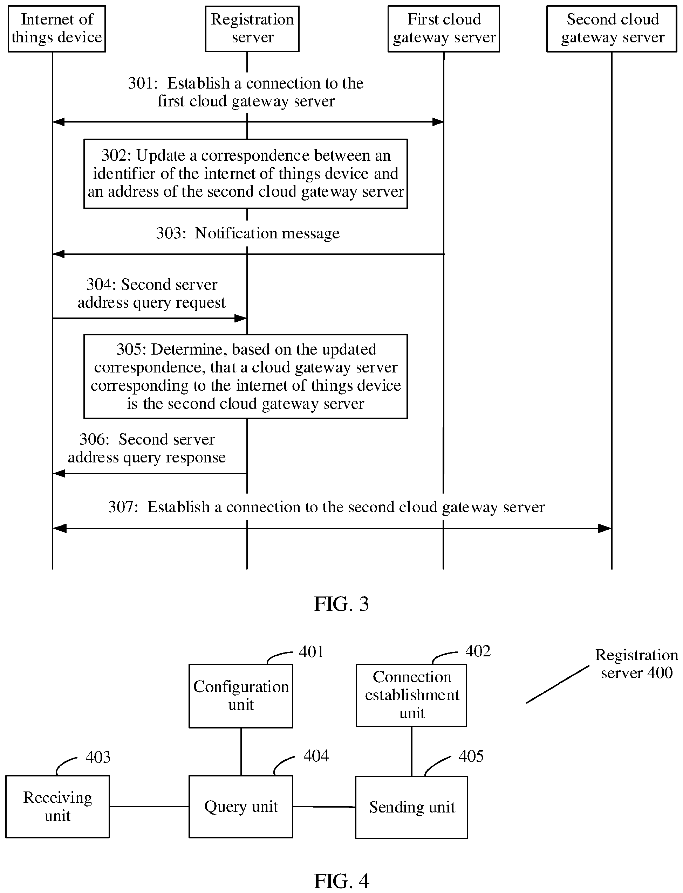

FIG. 3 shows another method for accessing a network by an internet of things device according to an embodiment of the present invention. The method includes the following steps.

Step 301: The internet of things device establishes a connection to a first cloud gateway server, and accesses the network by using the first cloud gateway server.

Step 302: A registration server updates a cloud gateway server corresponding to the internet of things device to a second cloud gateway server, and updates the correspondence between an identifier of the internet of things device and an address of the second cloud gateway server.

Step 303: The first cloud gateway server delivers a notification message to the internet of things device, where the notification message is used to instruct the internet of things device to update an address of the cloud gateway server.

Specifically, the notification message may be an access reject message, and the access reject message is used to indicate that the first cloud gateway server rejects the internet of things device to access the network.

Step 304: The internet of things device receives the notification message, determines that an accessed cloud gateway server needs to be updated, and sends a second server address query request to the registration server, where the second server address query request carries the identifier of the internet of things device.

Step 305: The registration server receives the second server address query request, determines, based on the updated correspondence, that the cloud gateway server corresponding to the internet of things device is the second cloud gateway server, and obtains the address of the second cloud gateway server.

Step 306: The registration server returns a second server address query response to the internet of things device, where the second server address query response carries the address of the second cloud gateway server.

Step 307: The internet of things device receives the server query response, establishes a connection to the second cloud gateway server based on the address of the second cloud gateway server, and accesses the network by using the second cloud gateway server.

It should be noted that the steps 301 and 302 are not subject to a specific sequence, and the step 302 may be performed before the step 301.

As described above, when the internet of things device accesses the network, the address of the cloud gateway server connected to the internet of things device is dynamically obtained by the internet of things device by accessing the registration server. In this way, when the internet of things device runs for the first time or fails to connect to the cloud gateway server, the internet of things device can obtain a latest address of the cloud gateway server by accessing the registration server, to ensure that the internet of things device can successfully access internet of things. Because a unified registration server is used, configuration of the internet of things device is simpler. Only an address of the registration server needs to be configured, and the address of the cloud gateway server does not need to be configured on the internet of things device. This reduces production complexity of the internet of things device. Further, when the cloud gateway server connected to the internet of things device changes, an address of a new cloud gateway server does not need to be manually configured. This avoids a problem of incorrect configuration that may be caused by manual processing. Further, in the prior art, when an entire internet of things device connected to the cloud gateway server is switched to another cloud gateway server, the original cloud gateway server cannot stop running before the switching is completed. In this embodiment of the present invention, an address of an updated second cloud gateway server is recorded on the registration server. When the first cloud gateway server is disabled and the internet of things device cannot access the network, because the registration server records the address of the second cloud gateway server, the internet of things device may obtain the address of the second cloud gateway server from the registration server, and access the network by using the second cloud gateway server.

Corresponding to the foregoing embodiments, an embodiment of the present invention further provides a registration server 400, and the registration server 400 includes:
a configuration unit 401, adapted to configure a correspondence between an identifier of an internet of things device and an address of a cloud gateway server;
a connection establishment unit 402, adapted to establish a communication connection to the internet of things device, where an address of the registration server is configured on the internet of things device;
a receiving unit 403, adapted to receive, through the communication connection, a first server address query request sent by the internet of things device, where the first server address query request carries the identifier of the internet of things device;
a query unit 404, adapted to query, based on the correspondence configured by the configuration unit 401, an address of a first cloud gateway server corresponding to the identifier of the internet of things device; and
a sending unit 405, adapted to return a first server address query response to the internet of things device, where the first server address query response carries the address of the first cloud gateway server obtained by the query unit 404 through query, and the address of the first cloud gateway server is used to instruct the internet of things device to establish a communication connection to the first cloud gateway server.

The configuration unit 401 is further adapted to update the correspondence, where an updated cloud gateway server corresponding to the internet of things device is a second cloud gateway server in the plurality of cloud gateway servers.

The receiving unit 403 is further adapted to receive a second server address query request sent by the internet of things device, where the second server address query request carries the identifier of the internet of things device.

The query unit 404 is further adapted to query the updated correspondence based on the identifier of the internet of things device, and determine that the updated cloud gateway server corresponding to the internet of things device is the second cloud gateway server.

The sending unit 405 is further adapted to return a second server address query response to the internet of things device, where the second server address query response carries an address of the second cloud gateway server obtained by the query unit 404 through query, and the address of the second cloud gateway server is used to instruct the internet of things device to establish a communication connection to the second cloud gateway server.

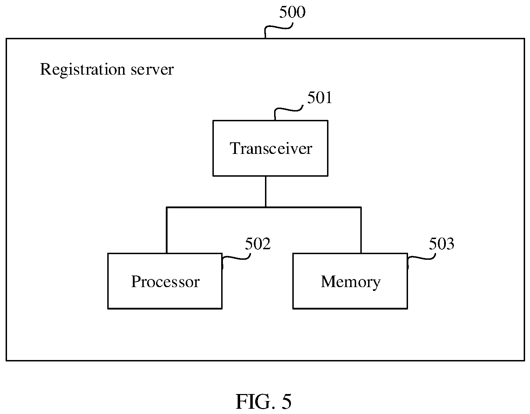

Based on a same invention concept, referring to FIG. 5, an embodiment of this application further provides a schematic diagram of a hardware structure of a registration server. The registration server 500 includes a transceiver 501, a processor 502, and a memory 503. The transceiver 501 and the memory 503 are connected to the processor 502. It should be noted that a connection manner between parts shown in FIG. 5 is merely a possible example. Alternatively, the transceiver 501 and the memory 503 are connected to the processor 502, and the transceiver 501 is not connected to the memory 503. Alternatively, another possible connection manner may be used.

The memory 503 stores a group of programs, and the processor 502 is adapted to invoke the programs stored in the memory 503, to perform the functions of the registration server in the internet of things system and the method for accessing a network by an internet of things device that are shown in FIG. 1 to FIG. 4.

In FIG. 5, the processor 502 may be a central processing unit (English: central processing unit, CPU for short), a network processor (English: network processor, NP for short), or a combination of the CPU and the NP.

The memory 501 may include a volatile memory (English: volatile memory), for example, a random-access memory (English: random-access memory, RAM for short). The memory 501 may also include a non-volatile memory (English: non-volatile memory), for example, a flash memory (English: flash memory), a hard disk drive (English: hard disk drive, HDD for short), or a solid-state drive (English: solid-state drive, SSD for short). The memory 401 may further include a combination of the foregoing types of memories.

The foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the protection scope of the technical solutions of the embodiments of the present invention.

## Claims

1. An internet of things system, comprising a registration server and a plurality of cloud gateway servers, wherein there is a communication connection between the registration server and an internet of things device;
the registration server is adapted to configure a correspondence between an identifier of the internet of things device and an address of the cloud gateway server;
the registration server is further adapted to receive, through the communication connection, a first server address query request sent by the internet of things device, wherein the first server address query request carries the identifier of the internet of things device;
the registration server is further adapted to: query, based on the correspondence, an address of a first cloud gateway server corresponding to the identifier of the internet of things device, and return a first server address query response to the internet of things device, wherein the first server address query response carries the address of the first cloud gateway server, and the address of the first cloud gateway server is used to instruct the internet of things device to establish a communication connection to the first cloud gateway server; and
the first cloud gateway server is adapted to establish the communication connection to the internet of things device.

2. The system according to claim 1, wherein
the registration server is further adapted to update the correspondence, wherein an updated cloud gateway server corresponding to the internet of things device is a second cloud gateway server in the plurality of cloud gateway servers; and
the first cloud gateway server is further adapted to send a notification message to the internet of things device, wherein the notification message is used to indicate that a cloud gateway server corresponding to the internet of things device changes.

3. The system according to claim 2, wherein
the registration server is further adapted to receive a second server address query request sent by the internet of things device, wherein the second server address query request carries the identifier of the internet of things device;
the registration server is further adapted to query the updated correspondence based on the identifier of the internet of things device, and determine that the updated cloud gateway server corresponding to the internet of things device is the second cloud gateway server;
the registration server is further adapted to return a second server address query response to the internet of things device, wherein the second server address query response carries an address of the second cloud gateway server, and the address of the second cloud gateway server is used to instruct the internet of things device to establish a communication connection to the second cloud gateway server; and
the second cloud gateway server is adapted to establish the communication connection to the internet of things device.

4. A method for accessing a network by an internet of things device, comprising:
configuring, by a registration server, a correspondence between an identifier of the internet of things device and an address of a cloud gateway server;
establishing, by the registration server, a communication connection to the internet of things device, wherein an address of the registration server is configured on the internet of things device;
receiving, by the registration server through the communication connection, a first server address query request sent by the internet of things device, wherein the first server address query request carries the identifier of the internet of things device; and
querying, by the registration server based on the correspondence, an address of a first cloud gateway server corresponding to the identifier of the internet of things device, and returning a first server address query response to the internet of things device, wherein the first server address query response carries the address of the first cloud gateway server, and the address of the first cloud gateway server is used to instruct the internet of things device to establish a communication connection to the first cloud gateway server.

5. The method according to claim 4, wherein after the internet of things device establishes the communication connection to the first cloud gateway server, the method further comprises:
updating, by the registration server, the correspondence, wherein an updated cloud gateway server corresponding to the internet of things device is a second cloud gateway server in the plurality of cloud gateway servers.

6. The method according to claim 5, wherein after the updating, by the registration server, the correspondence, the method further comprises:
receiving, by the registration server, a second server address query request sent by the internet of things device, wherein the second server address query request carries the identifier of the internet of things device;
querying, by the registration server, the updated correspondence based on the identifier of the internet of things device, and determining that the updated cloud gateway server corresponding to the internet of things device is the second cloud gateway server; and
returning, by the registration server, a second server address query response to the internet of things device, wherein the second server address query response carries an address of the second cloud gateway server, and the address of the second cloud gateway server is used to instruct the internet of things device to establish a communication connection to the second cloud gateway server.

7. The method according to claim 5, wherein after the updating, by the registration server, the correspondence, the method further comprises:
sending, by the first cloud gateway server, a notification message to the internet of things device, wherein the notification message is used to indicate that a cloud gateway server corresponding to the internet of things device changes.

8. A registration server, comprising:
a configuration unit, adapted to configure a correspondence between an identifier of an internet of things device and an address of a cloud gateway server;
a connection establishment unit, adapted to establish a communication connection to the internet of things device, wherein an address of the registration server is configured on the internet of things device;
a receiving unit, adapted to receive, through the communication connection, a first server address query request sent by the internet of things device, wherein the first server address query request carries the identifier of the internet of things device;
a query unit, adapted to query, based on the correspondence configured by the configuration unit, an address of a first cloud gateway server corresponding to the identifier of the internet of things device; and
a sending unit, adapted to return a first server address query response to the internet of things device, wherein the first server address query response carries the address of the first cloud gateway server obtained by the query unit through query, and the address of the first cloud gateway server is used to instruct the internet of things device to establish a communication connection to the first cloud gateway server.

9. The registration server according to claim 8, wherein
the configuration unit is further adapted to update the correspondence, wherein an updated cloud gateway server corresponding to the internet of things device is a second cloud gateway server in the plurality of cloud gateway servers.

10. The registration server according to claim 9, wherein
the receiving unit is further adapted to receive a second server address query request sent by the internet of things device, wherein the second server address query request carries the identifier of the internet of things device;
the query unit is further adapted to query the updated correspondence based on the identifier of the internet of things device, and determine that the updated cloud gateway server corresponding to the internet of things device is the second cloud gateway server; and
the sending unit is further adapted to return a second server address query response to the internet of things device, wherein the second server address query response carries an address of the second cloud gateway server obtained by the query unit through query, and the address of the second cloud gateway server is used to instruct the internet of things device to establish a communication connection to the second cloud gateway server.
